# EUROPÄISCHE PATENTSCHRIFT

(11) **EP 0 662 978 B1**
(45) Veröffentlichungstag und Bekanntmachung des Hinweises auf die Patenterteilung: **22.10.1997**
(21) Anmeldenummer: 94922220.2
(22) Anmeldetag: 27.07.1994
(51) Int. Cl.: C08F 2/44, C08F 20/12, G02B 1/04

(54) **VERFAHREN ZUR HERSTELLUNG EINES PHOTOCHROMEN GEGENSTANDES**
PROCESS FOR PRODUCING A PHOTOSENSITIVE OBJECT
PROCEDE DE FABRICATION D'UN OBJET PHOTOSENSIBLE

(30) Priorität: 27.07.1993 DE 4325154
(43) Veröffentlichungstag der Anmeldung: 19.07.1995
(73) Patentinhaber: Optische Werke G. Rodenstock, 80469 München (DE)
(72) Erfinder: EFFER, Erhard, D-82343 Pöcking (DE); MELZIG, Manfred, D-82234 Wessling (DE); ZINNER, Herbert, D-93080 Pentling (DE); SCHUSTER, Herbert, D-82275 Emmering (DE)
(74) Vertreter: Münich, Wilhelm, Dr.
(86) Internationale Anmeldenummer: DE9400871
(87) Internationale Veröffentlichungsnummer: WO9504086

(56) Entgegenhaltungen:
- EP-A- 0 227 337
- EP-A- 0 259 532

## Beschreibung

Die Erfindung bezieht sich auf ein Verfahren zur Herstellung eines photochromen Gegenstandes, der aus einem Polymer besteht und wenigstens eine Spirooxazin-Verbindung enthält gemäß dem Oberbegriff des Patentanspruchs 1.

Bei den Verfahren zur Herstellung eines photochromen Gegenstandes aus einem Polymer gibt es zwei grundsätzlich unterschiedliche Vorgehensweisen:

Bei der einen Vorgehensweise wird zunächst ein nichtphotochrom eingefärbter Gegenstand hergestellt, der dann nachträglich von einer oder mehreren Oberflächen her "oberflächlich" photochrom eingefärbt wird. Ein Beispiel für ein Verfahren, das diese Vorgehensweise realisiert, ist in der DE-A-35 16 568 beschrieben, auf die im übrigen bezüglich der Erläuterung aller hier nicht näher beschriebenen Begriffe ausdrücklich Bezug genommen wird.

Bei der anderen Vorgehensweise werden die photochromen Farbstoffe in das Material, aus dem der photochrome Gegenstand hergestellt wird, vor dessen Polymerisation gemischt. Verfahren, die diese Vorgehensweise realisieren, sind in der US-PS 4 342 668 oder der EP-B-0 227 337 beschrieben. Das in der letztgenannten Druckschrift beschriebene Verfahren ist im übrigen bei der Formulierung des Oberbegriffs des Patentanspruchs 1 als gattungsbildend vorausgesetzt worden.

Erfindungsgemäß sind nun folgende Nachteile der Verfahren, bei dem der oder die photochromen Farbstoffe in das Monomer vor der Polymerisation gemischt werden, und insbesondere des aus der EP-B-0 227 337 bekannten Verfahrens erkannt worden:

Bereits zur Erzielung relativ geringer Eindunkelungen sind vergleichsweise hohe Konzentrationen erforderlich: So ist es bei dem aus der EP-B-0 227 337 bekannten Verfahren erforderlich, den Farbstoff mit einer Konzentration von 1,5% bezogen auf das Gewicht des Monomers einzusetzen, um Eindunkelungen von maximal 0,47, typischerweise 0,25 im Maximum der Absorption gemessen - nach Vλ bewertet sogar nur 0,2 - zu erhalten.

Darüberhinaus wird bei dem aus der EP-B-0 227 337 bekannten Verfahren nur ein geringer Aushärtegrad des Polymers erreicht. Dies führt zwar zu der offensichtlich gewünschten sehr schnellen Eindunkelung und Aufhellung, der geringe Aushärtegrad hat jedoch neben mechanischen Problemen auch eine vergleichsweise geringe Lebensdauer der Farbstoffe sowie eine sehr hohe Temperaturabhängigkeit der Eindunkelung zur Folge.

Darüberhinaus erlaubt das aus der EP-B-0 227 337 bekannte Verfahren nicht die Herstellung von photochromen Gegenständen und insbesondere von Brillengläsern, die eine neutral graue, neutral braune oder grüne photochrome Einfärbung aufweisen.

Der Erfindung liegt die Aufgabe zugrunde, ein Verfahren zur Herstellung eines photochromen Gegenstandes, der aus einem Polymer besteht und wenigstens eine Spirooxazin-Verbindung enthält, die dem Monomer vor der Polymerisation zugesetzt wird, derart weiterzubilden, daß ein Gegenstand mit guten mechanischen Eigenschaften erhalten wird, bei dem die Eindunkelung und Aufhellung in einem physiologisch angenehmen Bereich liegen, ohne daß die Temperaturabhängigkeit dieser Größen zu groß wird.

Eine erfindungsgemäße Lösung dieser Aufgabe ist im Patentanspruch 1 angegeben. Weiterbildungen der Erfindung sind Gegenstand der abhängigen Ansprüche.

Erfindungsgemäß werden zur Erzielung einer neutral grauen, neutral brauen oder grünen photochromen Einfärbung der polymerisierbaren Mischung mehrere Farbstoffe zugesetzt, von denen mindestens einer kein Spirooxazin ist. Wie bereits anderweitig erkannt worden ist, lassen sich bei ausschließlicher Verwendung von photochromen Farbstoffen aus der Klasse der Spirooxazine keine im photochrom eingefärbten Zustand neutral grauen, neutral braunen oder grünen Gläser herstellen. Spironaphthoxazine und heteroaromatische Analoge zeigen rotviolette bis blaugrüne, Spirobenzoxazine rote bis violette Einfärbungen. Im blauen Spektralbereich absorbierende gelbe bis gelborange Farbstoffe gibt es nach gegenwärtiger Kenntnis unter den Spirooxazinen nicht.

Deshalb werden erfindungsgemäß zusätzlich photochrome Farbstoffe anderer Klassen zugesetzt:
Hierfür können sämtliche bislang für die Einfärbung von Kunststoffmaterialien bekannten Farbstoffe eingesetzt werden. Beispiele hierfür sind im Anspruch 2 angegeben, gemäß dem zusätzlich zu Spirooxazinen photochrome Pyrane und insbesondere Spiropyrane, Indolizine sowie Fulgimide bzw. eine Mischung aus diesen Farbstoffen eingesetzt werden.
Eine grüne Einfärbung läßt sich in bekannter Weise durch Mischung einer oder mehrerer gelber oder blauer photochromer Verbindungen oder durch Einsatz langwellig im roten Spektralbereich absorbierender photochromer Verbindungen erreichen.

Weiterhin beträgt erfindungsgemäß die Konzentration der Spirooxazin-Verbindungen nicht mehr als 0,045 Gew.% bezogen auf die Masse des eingesetzten Monomers und liegt damit unter dem in der EP-B-0 227 337 angegebenen Bereich und sehr deutlich unter den Konzentrationen, die bei den in der EP-B-0 227 337 beschriebenen Ausführungsbeispielen verwendet werden. Diese Unterschreitung des in dieser Druckschrift angegebenen Bereichs stellt im Hinblick auf die hohen Kosten photochromer Farbstoffe einen großen wirtschaftlichen Vorteil dar.

Gleichzeitig wird die Konzentration des oder der Polymerisationsinitiatoren deutlich gegenüber dem in der EP-B-0 227 337 angegebenen Bereich erhöht. Hierdurch erhält man gut ausgehärtete photochrome Gegenstände und insbesondere photochrome Brillengläser, die sämtlichen mechanischen Anforderungen genügen, die an Brillengläser aus Kunststoff gestellt werden. Dabei ist von besonderem Vorteil, daß die Eindunkelungs- und Aufhell-Zeit in einen Zeitbereich verschoben wird, der nach diesseitigen Erkenntnissen physiologisch besonders günstig ist. Letztlich ist die Temperaturabhängigkeit der Eindunkelung und der Aufhellung deutlich geringer als bei bekannten photochromen Gegenständen.

Als Initiatoren können dabei bekannte Initiatoren, wie Peroxyketale oder Alkylperoxyester verwendet werden, die gegenüber photochromen Farbstoffen und insbesondere Spirooxazinen wesentlich weniger reaktiv und damit zerstörend als die beim Stand der Technik verwendeten Peroxydicarbonate wie CHPC (Cyclohexylperoxydicarbonat)-Initiatoren sind.

Dabei ist es besonders vorteilhaft, wenn die Konzentration des oder der eingesetzten Polymerisationsinitiatoren bis zu 5 Gew.%, bevorzugt 1,5 bis 2 Gew.% beträgt (Ansprüche 3 und 4).

Ein weiterer Nachteil der aus dem Stand der Technik bekannten Brillengläser besteht darin, daß das Gleichgewicht zwischen der geschlossenen (farblosen) und der offenen (farbigen) Form aufgrund des Herstellverfahrens hin zur offenen Form verschoben ist, so daß man eine in vielen Anwendungsfällen störende Vorfärbung erhält.

Erfindungsgemäß ist erkannt worden, daß dies eine Folge der beim Stand der Technik schnell durchgeführten Aushärtung ist, bei der die Farbstoffe durch den Polymerisationsinitiator angegriffen werden. Deshalb ist es erfindungsgemäß besonders bevorzugt, wenn gemäß Anspruch 5 die Polymerisation während eines Zeitraums von bis zu 2 Tagen ausgeführt wird; hierdurch erhält man Gläser mit einer besonders geringen Vorfärbung.

Die mechanischen Eigenschaften und die Leistung der photochromen Farbstoffe werden weiter dadurch verbessert, daß die Polymerisation nach einem Temperaturprogramm ausgeführt wird, in dessen letzter Stufe die Temperatur mehr als 110°C beträgt (Anspruch 6).

Hierzu tragen auch die in den Ansprüchen 7 f. angegebenen Merkmale bei:

Gemäß Anspruch 7 wird die Mischung aus Monomeren, photochromen Farbstoffen und Polymerisationsinitiatoren vor der Polymerisation entgast, so daß ein Gegenstand entsteht, der keine Luftblasen oder Lunker aufweist.

Besonders vorteilhaft ist es, wenn gemäß Anspruch 8 die Gießformen aus einem Material bestehen, das für die Anregungswellenlängen der eingesetzten photochromen Farbstoffe undurchlässig ist. Hierdurch wird sichergestellt, daß die photochromen Farbstoffe in die Matrix der sie umgebenden Polymere im "nichtangeregten Zustand" eingebaut werden, so daß man keine permanente Vor färbung erhält.

Hierzu tragen auch die in den Ansprüchen 9 und 10 angegebenen Merkmale bei, gemäß denen der Mischvorgang und der Polymerisationsvorgang unter Einwirkung von langwelligem sichtbaren Licht erfolgt, durch das die eingesetzten Farbstoffe vollständig in die geschlossene, d.h. farblose Form überführt werden.

Selbstverständlich können für das erfindungsgemäße Verfahren als Monomere beliebige Acrylatmonomere oder Methacrylatmonomere verwendet werden. Beispiele hierfür sind im Anspruch 11 angegeben, gemäß dem als Monomer
2,2'-Bis (4-(methacryloxy-ethoxy)phenyl)propan
2,2'-Bis(4-(methacryloxy-diethoxy)phenyl)propan
Trimethylolpropantrimethacrylat
Ethylenglycoldimethacrylat
Diethylenglycoldimethacrylat
Triethylenglycoldimethacrylat
Benzylmethacrylat
4-tert. Butylcyclohexylmethacrylat
Neopentylglycoldimethacrylat

eingesetzt werden kann. Die Liste der aufgezählten Monomere ist selbstverständlich nicht vollständig, insbesondere können dabei höhere Homologe eingesetzt werden.

Bei der Verwendung von Diacrylaten und Dimethacrylaten mit längeren Kohlenwasserstoffetherbrücken als Comonomere ergeben sich Nachteile, z.B. eine zu langsame Aufhellung der photochromen Farbstoffe. Die Aufhellung kann durch den Zusatz spezieller Reagenzien, wie beispielsweise bestimmter Phosphorverbindungen (Anspruch 12) deutlich erhöht werden.

Die Erfindung ist vorstehend allgemein beschrieben worden; anhand eines Ausführungsbeispiels soll das oben beschriebene Verfahren nochmals verdeutlicht werden:

Zur Herstellung der photochromen Gießharzmischung wird in 100 g Monomer ( bestehend aus 40% Diethylenglykoldiacrylat, 25% Diethylenglykoldimethacrylat, 30 % Triethylenglykoldiacrylat und 5 % höheren Oligomeren des Ethylenglykoldiacrylats ) bei 20°C unter Lichtabschluß die photochrome Farbmischung eingerührt.
Diese besteht aus:
- 12 mg: 5-Acetoxy-3,3-diphenyl-3H-naphtho (2,1-b)pyran WO 92/09593
- 35 mg: 8-Methoxy-3,3-diphenyl-3H-naphtho (2,1-b)pyran US 5.238.981
- 28 mg: Spiro( 5-methoxy-1,3,3-trimethylindolin)-2,3'-3H-9'-methoxy-naphth(2,1-b)oxazin DE 2.936.255
- 6 mg: Spiro( 1,3,3-trimethylindolin)-2,3'-3H-9'-methoxy-6'-(pyrrolid-1-yl)-naphth (2,1-b)oxazin EU 84 115 602
- 8 mg: Spiro ( 1,3,3-trimethylindolin)-2,3'-3H-5'-(5-methyloxadiazo-2-yl-naphth(2,1-b)oxazin DE 3.814.631
- 2 mg: 2,2-Diphenyl-2H-naphtho(1,2-b)pyran US 3.627.690
- 18 mg: Spiroadamantanfulgid (gemäß Beispiel 1 der EU 0351.112)

Nach Zugabe von 1,5 g Initiator ( tert. Butylperneodecanoat ) wird noch 15 min bei 20°C gerührt. Die Mischung wird durch dreimaliges 10-minütiges Evakuieren und Druckausgleich mittels Argon von Luftsauerstoff befreit und dann - weiter unter Lichtabschluß bzw. unter Rotlicht - in Gießformen für Plangläser eingefüllt.

Polymerisation der photochromen Kunststoffgläser erfolgt in Gießformen. Diese werden in ein Wasserbad gestellt, das folgendes Temperaturprogramm durchläuft. Die Temperatursteigerung je Schritt erfolgt in etwa 20 min, diese Zeit wird der höheren Temperatur bereits zugeschlagen.
20 h 20°C => 2 h 30°C => 2 h 40°C => 6 h 50°C => 4 h 60°C => 3 h 70°C => 3 h 75°C => 4 h 80°C

Die gefüllten Formen werden innerhalb 1 h auf etwa 60°C abgekühlt. Die Gläser werden von Ring und Gießformschalen befreit und noch 50 min bei 115°C ausgetempert, um evtl. durch die Gießformen auferzwungene Spannungen zu beseitigen und des Glas vollständig auszuhärten. Die Gießformen sollten aus mind. bis 390 nm für UV-Licht undurchläßigem Spezialglas bestehen, bei vorherigem konsequentem Lichtabschluß genügen auch einfach geschwärzte Formen. In der Serienfertigung ist es anstelle des Lichtabschlusses während der Vorbereitung einfacher, übliche weiße Gießformen zu verwenden. In diesem Fall muß die komplette Aufhellung der Gießharzmischung durch Einstrahlung in das Wasserbad erfolgen, besonders geeignet erwies sich das Licht einer Xenon-hochdrucklampe, das mittels einer handelsüblichen Polycarbonat-scheibe von allen Anteilen mit Wellenlängen < 400 nm befreit wurde.

Die resultierenden Plangläser sind in hervorragender Weise für Brillengläser geeignet. Ihre nach der spektralen Hellempfindlichkeit des menschlichen Auges Vλ bewertete Transmission im nicht angeregten Zustand beträgt 89%, die Gläser erscheinen nahezu farblos. Nach einer 15-minütigen Anregung mit 50 klux bei 23°C gemäß DIN 58 217 beträgt die Transmission nur noch 23%, wobei ein kosmetisch sehr ansprechender warmer graubrauner Farbton erzielt wird.

## Patentansprüche

1. Verfahren zur Herstellung eines photochromen Gegenstandes, der aus einem Polymer besteht und wenigstens eine Spirooxazin-Verbindung enthält,
mit folgenden Verfahrensschritten:
- als polymerisierbares Monomer wird ein Acrylatmonomer oder ein Methacrylatmonomer bzw. eine Mischung aus mehreren dieser Monomere verwendet,
- die photochromen Farbstoffe sowie ein Polymerisationsinitiator werden in das polymerisierbare Monomer gemischt,
- die derart erhaltene Mischung wird in eine Gießform eingebracht, polymerisiert und ausgehärtet,
dadurch **gekennzeichnet**, daß
- zur Erzielung einer neutral grauen, neutral braunen oder grünen photochromen Einfärbung der polymerisierbaren Mischung mehrere photochrome Farbstoffe zugesetzt werden, von denen mindestens einer kein Spirooxazin ist, und
daß die Konzentration
- der Spirooxazin-Verbindung(en) nicht mehr als 0,045 Gew.% bezogen auf die Masse des eingesetzten Monomers, und die
- des oder der Polymerisationsinitiatoren mehr als 1 Gew.% bezogen auf die Masse des eingesetzten Monomers beträgt.

2. Verfahren nach Anspruch 1,
dadurch **gekennzeichnet**, daß der weitere photochrome Farbstoff ein Pyran und insbesondere ein Spiropyran, ein Indolizin oder ein Fulgimid bzw. eine Mischung aus diesen Farbstoffen ist.

3. Verfahren nach Anspruch 1 oder 2,
dadurch **gekennzeichnet**,. daß die Konzentration des oder der eingesetzten Polymerisationsinitiatoren bis zu 5 Gew.% beträgt.

4. Verfahren nach einem der Ansprüche 1 bis 3,
dadurch **gekennzeichnet**, daß die Konzentration des oder der eingesetzten Polymerisationsinitiatoren zwischen 1,5 und 2 Gew.% beträgt.

5. Verfahren nach einem der Ansprüche 1 bis 4,
dadurch **gekennzeichnet**, daß die Polymerisation während eines Zeitraums von bis zu 2 Tagen ausgeführt wird.

6. Verfahren nach einem der Ansprüche 1 bis 5,
dadurch **gekennzeichnet**, daß die Polymerisation nach einem Temperaturprogramm ausgeführt wird, in dessen letzter Stufe die Temperatur mehr als 110°C beträgt.

7. Verfahren nach einem der Ansprüche 1 bis 6,
dadurch **gekennzeichnet**, daß die Mischung aus Monomer(en), photochromen Farbstoff(en) und Polymerisationsinitiator(en) vor der Polymerisation entgast wird.

8. Verfahren nach einem der Ansprüche 1 bis 7,
dadurch **gekennzeichnet**, daß Gießformen aus einem Material verwendet werden, das für die Anregungswellenlängen der eingesetzten photochromen Farbstoffe undurchlässig ist.

9. Verfahren nach einem der Ansprüche 1 bis 8,
dadurch **gekennzeichnet**, daß die Mischung aus Monomer(en), photochromen Farbstoff(en) und Polymerisationsinitiator(en) unter Einwirkung von langwelligem sichtbarem Licht und insbesondere für Spirooxazine Licht im gelben bis roten Spektralbereich zubereitet wird, so daß evtl. vorhandene offene, d.h. farbige Formen der photochromen Moleküle in die geschlossenen (farblosen) Formen überführt werden.

10. Verfahren nach Anspruch 9,
dadurch **gekennzeichnet**, daß die Einstrahlung von langwelligem sichtbarem Licht während der Polymerisationszeit aufrechterhalten wird.

11. Verfahren nach einem der Ansprüche 1 bis 10,
dadurch **gekennzeichnet**, daß als Monomer
2,2'-Bis(4-(methacryloxy-ethoxy)phenyl)propan
2,2'-Bis (4-(methacryloxy-diethoxy)phenyl)propan
Trimethylolpropantrimethacrylat
Ethylenglycoldimethacrylat
Diethylenglycoldimethacrylat
Triethylenglycoldimethacrylat
Benzylmethacrylat
4-tert. Butylcyclohexylmethacrylat
Neopentylglycoldimethacrylat
oder eine Mischung dieser Monomere, sowie eine Mischung dieser Monomere mit anderen Acrylaten eingesetzt wird.

12. Verfahren nach einem der Ansprüche 1 bis 11,
dadurch **gekennzeichnet**, daß zur Verkürzung der Aufhellzeit der Mischung aus Monomer(en), photochromen Farbstoff(en) und Polymerisationsinitiator (en) Phosphorverbindungen zugesetzt werden.

## Claims

1. Method of manufacturing a photochromic object which consists of a polymer and contains at least one spiro oxazine compound,
with the following process steps:
- an acrylate monomer or a methacrylate monomer or a mixture of a plurality of these monomers is used as polymerisable monomer,
- the photochromic colouring agents as well as a polymerisation initiator are mixed into the polymerisable monomer,
- the mixture obtained in this way is put into a casting mould, polymerised and cured,
**characterised in that**
- in order to obtain a neutral gray, neutral brown or green photochromic colouring of the polymerisable mixture, a plurality of photochromic colouring agents is added, at least one of which is not a spiro oxazine, and
**in that** the concentration
- of the spiro oxazine compound(s) amounts to not more than 0.045% by weight in relation to the mass of the monomer used, and that of the polymerisation initiator or initiators amounts to more than 1% by weight in relation to the mass of the monomer used.

2. Method according to claim 1,
**characterised in that** the additional photochromic colouring is a pyran and especially a spiro pyran, an indolizine or a fulgimide or a mixture of these colouring agents.

3. Method according to claim 1 or 2,
**characterised in that** the concentration of the polymerisation initiator(s) used amounts to up to 5% by weight.

4. Method according to one of claims 1 to 3,
**characterised in that** the concentration of the polymerisation initiator(s) used is between 1.5 and 2 % by weight.

5. Method according to one of claims 1 to 4,
**characterised in that** the polymerisation is carried out during a period of up to 2 days.

6. Method according to one of claims 1 to 5,
**characterised in that** the polymerisation is carried out according to a temperature programme in the last stage of which the temperature is more than 110°C.

7. Method according to one of claims 1 to 6,
**characterised in that** the mixture of monomer(s), photochromic colouring agent(s) and polymerisation initiator(s) is degassed before polymerisation.

8. Method according to one of claims 1 to 7,
**characterised in that** casting moulds are used which are made of a material which is impervious to the excitation wavelengths of the photochromic colouring agents used.

9. Method according to one of claims 1 to 8,
**characterised in that** the mixture of monomer(s), photochromic colouring agent(s) and polymerisation initiator(s) is prepared under the action of longwave visible light and especially for spiro oxazines light in the yellow to red region of the spectrum, so that any open, i.e. coloured, forms of the photochromic molecules which may be present are converted into the closed (colourless) forms.

10. Method according to claim 9,
**characterised in that** the irradiation of longwave visible light is maintained during the polymerisation period.

11. Method according to one of claims 1 to 10,
**characterised in that** the following are used as monomers:
2,2'-bis (4-(methacryloxy-ethoxy)phenyl)propane
2,2'-bis (4-methacryloxy-diethoxy)phenyl)propane
trimethylol propane trimethacrylate
ethylene glycol dimethacrylate
diethylene glycol dimethacrylate
triethylene glycol dimethacrylate
benzyl methacrylate
4.-tert. butyl cyclohexyl methacrylate
neopentyl glycol dimethacrylate
or a mixture of these monomers as well as a mixture of these monomers with other acrylates.

12. Method according to one of claims I to 11,
**characterised in that** phosphorus compounds are added to the mixture of monomer(s), photochromic colouring agent(s) and polymerisation initiator(s) to shorten the brightening time.

## Revendications

1. Procédé de fabrication d'un objet photosensible et notamment photochromique, qui est constitué d'un polymère et qui contient au moins un composé de type spiro-oxazine,
ce procédé comportant les étapes suivantes:
- on utilise en tant que monomère polymérisable un monomère du type acrylate, ou un monomère du type méthacrylate, ou un mélange de plusieurs de ces monomères,
- les colorants photochromiques, ainsi qu'un amorceur de polymérisation, sont mélangés au monomère polymérisable,
- le mélange ainsi obtenu est mis en place dans un moule de coulée, il y est polymérisé et entièrement durci,
caractérisé en ce que
- pour obtenir une coloration photochromique en gris neutre, en brun neutre, ou en vert du mélange polymérisable, plusieurs colorants photochromiques sont ajoutés, dont au moins un n'est pas une spirooxazine,
et en ce que la concentration en
composé(s) de type spiro-oxazine, n'est pas supérieure à 0,045% en poids, par rapport à la masse du monomère utilisé,
et la concentration en un ou des amorceurs de polymérisation est supérieure à 1% en poids par rapport à la masse du monomère utilisé.

2. Procédé selon la revendication 1,
caractérisé en ce que l'autre colorant photochromique est un pyrane, et en particulier un spiropyrane, une indolizine ou un fulgimide, ou encore un mélange de ces colorants.

3. Procédé selon la revendication 1 ou 2 ,
caractérisé en ce que la concentration en amorceur(s) de polymérisation, que l'on utilise, peut aller jusqu'à 5% en poids.

4. Procédé selon l'une des revendications 1 à 3,
caractérisé en ce que la concentration en amorceur(s) de polymérisation que l'on utilise se situe entre 1,5 et 2% en poids.

5. Procédé selon l'une des revendications 1 à 4,
caractérisé en ce que la polymérisation est exécutée en un temps pouvant aller jusqu'à 2 jours.

6. Procédé selon l'une des revendications 1 à 5,
caractérisé en ce que la polymérisation est exécutée selon un programme de températures, dans les dernières étapes duquel la température est supérieure à 110°C.

7. Procédé selon l'une des revendications 1 à 6,
caractérisé en ce que le mélange de monomère(s), de colorant(s) photochromique(s) et d'amorceur(s) de polymérisation est dégazé avant la polymérisation.

8. Procédé selon l'une des revendications 1 à 7,
caractérisé en ce que l'on utilise des moules de coulée constitués d'un matériau qui est opaque aux longueurs d'ondes d'excitation des colorants photochromiques utilisés.

9. Procédé selon l'une des revendications 1 à 8,
caractérisé en ce que le mélange de monomère(s), de colorant(s) photochromique(s) et d'amorceur(s) de polymérisation est préparé sous l'action d'une lumière visible de grande longueur d'onde, et en particulier dans le cas de spirooxazines d'une lumière se situant dans la zone jaune à rouge du spectre, de telle sorte que des formes ouvertes, c'est-à-dire colorées, des molécules photochromiques soient transformées en formes fermées (incolores).

10. Procédé selon la revendication 9,
caractérisé en ce que l'exposition au rayonnement de lumière visible de grande longueur d'onde est maintenue pendant le durée de la polymérisation.

11. Procédé selon l'une des revendications 1 à 10,
caractérisé en ce que l'on utilise en tant que monomère
du 2,2'-bis(4-(méthacryloxy-éthoxy)phényl)propane,
du 2,2'-bis(4-méthacryloxy-diéthoxy)phényl)propane,
du triméthacrylate de triméthylol propane,
du diméthacrylate d'éthylène-glycol,
du diméthacrylate de diéthylène-glycol
du diméthacrylate de triéthylène-glycol,
du méthacrylate de benzyle,
du 4-tert-méthacrylate de butylcyclohexyle,
du diméthacrylate de néopentylglycol,
ou un mélange de ces monomères ainsi qu'un mélange de ces monomères avec d'autres acrylates.

12. Procédé selon l'une des revendications 1 à 11,
caractérisé en ce que, pour raccourcir le temps d'éclaircissement du mélange de monomère(s), de colorant(s) et d'amorceur(s) de polymérisation, on ajoute des composés du phosphore.
